# FASCICULE DE BREVET EUROPEEN

(11) **EP 2 257 407 B1**
(45) Date de publication et mention de la délivrance du brevet: **07.09.2016**
(21) Numéro de dépôt: 09727141.5
(22) Date de dépôt: 25.03.2009
(51) Int. Cl.: B23P 13/02, B23P 15/00, B23C 3/18, B23Q 11/00, B23C 1/04, B26F 3/00, B24C 1/04, F01D 5/34

(54) **PROCÉDÉ DE FABRICATION D'UN DISQUE AUBAGÉ MONOBLOC, AVEC ANNEAU PROVISOIRE DE MAINTIEN DES AUBES AGENCÉ A DISTANCE DE LEUR TÊTE**
VERFAHREN ZUR HERSTELLUNG EINER EINTEILIGEN SCHAUFELSCHEIBE MIT EINEM TEMPORÄREN SCHAUFELSTÜTZRING IN ABSTAND ZU DEREN SPITZEN
METHOD FOR PRODUCING A ONE-PIECE BLADED DISC, WITH TEMPORARY BLADE-SUPPORTING RING AT A DISTANCE FROM THEIR TIPS

(30) Priorité: 31.03.2008 FR 0852080
(43) Date de publication de la demande: 08.12.2010
(73) Titulaire: Snecma, 75015 Paris (FR)
(72) Inventeur: BERLANGER, Serge, F-91310 Leuville Sur Orge (FR); BORDU, Sébastien, F-77170Brie Comte Robert (FR); MALEVILLE, Thierry, Jean, F-91490 Milly La Foret (FR); ROCA, Christophe, Charles, Maurice, F-91450 Soisy Sur Seine (FR)
(74) Mandataire: Ilgart, Jean-Christophe
(86) Numéro de dépôt international: PCT/EP2009/053484
(87) Numéro de publication internationale: WO 2009/121766

(56) Documents cités:
- EP-A- 1 285 714
- EP-A- 1 433 557
- EP-A- 1 502 682
- EP-A2- 1 652 611
- WO-A-2007/082504
- FR-A- 2 699 850
- US-A- 5 867 885
- US-B1- 6 276 899

## Description

### DOMAINE TECHNIQUE

La présente invention se rapporte de façon générale au domaine de la fabrication des disques aubagés monoblocs, de préférence pour turbomachine d'aéronef.

### ETAT DE LA TECHNIQUE ANTERIEURE

Pour la fabrication d'un disque aubagé monobloc, également dénommé « DAM », ou « blisk » en anglais, il est possible d'avoir recours à une étape de découpe par jet d'eau abrasif d'un bloc de matière, suivie d'une ou plusieurs étapes de fraisage.

La mise en oeuvre d'une étape de découpe par jet d'eau abrasif, antérieurement au fraisage, permet de réduire considérablement les temps et coûts de fabrication par rapport à un procédé uniquement basé sur du fraisage. Cela s'explique en particulier par le fait qu'un tel procédé de fabrication requiert environ 75% de retrait de matière du bloc de départ pour aboutir au DAM. Le retrait d'une grande partie de cette matière par découpe au jet abrasif permet en effet de réduire les temps de production, et limite par ailleurs l'usure des fraiseuses.

Néanmoins, ce procédé ne peut pas être considéré comme totalement optimisé. En effet, un inconvénient réside dans la présence de déformations et de vibrations des aubes au cours de ce procédé de fabrication, cet inconvénient étant d'autant plus important que les aubes sont longues. Ces déformations et vibrations nécessitent, pour limiter leurs conséquences sur la qualité du DAM produit, d'appliquer aux différents outillages des vitesses d'avance réduites, pénalisantes en termes de temps de production. Les vibrations ainsi que les temps de fabrication prolongés provoquent également une forte usure des outillages, impactant de façon négative les coûts de production.

Le document EP-A-1 285 714 décrit un procédé de fabrication d'un disque aubagé monobloc par fraisage d'un bloc de matière.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un procédé de fabrication d'un disque aubagé monobloc, comprenant :
- une étape de découpe par jet d'eau abrasif d'un bloc de matière, réalisée de manière à faire apparaître des préformes d'aubes s'étendant radialement à partir d'un disque, tout en conservant de la matière formant moyens de liaison entre les préformes d'aubes directement consécutives, l'étape de découpe étant réalisée de manière à ce que lesdits moyens de liaison forment sensiblement un anneau espacé radialement dudit disque, et reliant entre elles lesdites préformes d'aubes, à distance de leur tête, radialement vers l'intérieur ; puis
- une étape de retrait desdits moyens de liaison.

Ainsi, l'invention est remarquable en ce qu'elle prévoit, au cours de l'étape de découpe par jet d'eau abrasif, de laisser apparaître un anneau de maintien entre elles des préformes d'aubes. Cela permet de limiter fortement, voire d'éradiquer les déformations et les vibrations des aubes au cours de leur fabrication, étant donné qu'elles demeurent maintenues mécaniquement les unes aux autres par de la matière du bloc initial.

Cette spécificité permet avantageusement d'appliquer aux différents outillages des vitesses d'avance élevées, diminuant les temps de production, sans impacter la qualité du DAM produit. Par ailleurs, la diminution des temps de production, ainsi que la diminution des vibrations des aubes au cours de leur fabrication, ralentit l'usure des outillages, ce qui limite de façon avantageuse les coûts de production.

L'étape de découpe par jet d'eau abrasif est donc réalisée de manière à ce que lesdits moyens de liaison forment sensiblement un anneau, de préférence centré sur l'axe du disque, et à distance des têtes des préformes d'aubes. Préférentiellement, cet anneau s'étend sur 360°, en étant uniquement interrompu par les préformes d'aubes qu'il relie. Néanmoins, comme évoqué ci-dessus, cet anneau pourrait ne pas être entièrement fermé, à savoir ne pas relier certaines préformes directement consécutives.

Cependant, l'étape de découpe par jet d'eau abrasif est préférentiellement réalisée de manière à ce que ledit anneau relie entre elles la totalité des préformes d'aubes, chacune destinée à constituer ultérieurement une aube du DAM. L'anneau relie alors entre elles lesdites préformes d'aubes, à distance de leur tête, radialement vers l'intérieur. Dans un tel cas, il est par exemple envisagé que l'anneau relie les préformes entre elles à environ mi-longueur.

Il est précisé qu'il est possible de prévoir à la fois un anneau de maintien périphérique, ainsi qu'un anneau de maintien intérieur tel que décrit ci-dessus, situé radialement intérieurement par rapport à l'anneau périphérique.

La matière formant moyens de liaison est de préférence conservée jusqu'à la fin de l'étape de découpe par jet d'eau abrasif. Elle est alors retirée seulement lors d'une étape ultérieure du procédé de fabrication du DAM.

A cet égard, il est noté l'étape de découpe par jet d'eau abrasif est suivie d'une étape de fraisage des préformes d'aubes, celle-ci étant préférentiellement réalisée de manière à obtenir des ébauches d'aubes mises à profil, cette étape étant de préférence suivie d'une étape de finition par fraisage des ébauches d'aubes, de manière à obtenir les aubes au profil final.

Selon un premier mode de réalisation préféré de la présente invention, ladite étape de retrait desdits moyens de liaison est réalisée antérieurement à ladite étape de fraisage des préformes d'aubes, et donc de préférence entre cette dernière étape et l'étape de découpe par jet d'eau abrasif.

Selon un second mode de réalisation préféré de la présente invention, ladite étape de retrait desdits moyens de liaison est réalisée entre ladite étape de fraisage des préformes d'aubes et ladite étape de finition.

Plus généralement, il est possible de prévoir que ladite étape de retrait desdits moyens de liaison est réalisée postérieurement à ladite étape de fraisage des préformes d'aubes, que celle-ci soit suivie d'une étape distincte de finition par fraisage, ou bien qu'elle intègre une telle étape de finition.

A cet égard, selon un troisième mode de réalisation préféré de la présente invention, ladite étape de retrait desdits moyens de liaison est réalisée postérieurement à ladite étape de finition.

Bien entendu, d'autres étapes classiques peuvent être mises en oeuvre dans le procédé selon l'invention, telles que :
- le tournage du bloc de matière avant l'étape de découpe par jet d'eau abrasif ;
- le polissage et/ou le grenaillage des aubes après l'étape de finition ;
- la mise à longueur des aubes ;
- et l'équilibrage du DAM.

De préférence, ledit disque aubagé monobloc présente un diamètre supérieur ou égal à 800 mm. A cet égard, il est précisé que la présence des moyens de liaison maintenant les aubes entre elles pendant leur fabrication permet d'envisager la fabrication de DAMs de grands diamètres, avec des aubes de grandes longueurs, puisque les déformations et vibrations de celles-ci sont réduites, voire supprimées. De préférence, les aubes ont une longueur minimale de 150 mm.

De préférence, ledit disque aubagé monobloc présente un disque d'épaisseur supérieure ou égale à 100 mm. Néanmoins, il peut présenter une épaisseur de l'ordre de 160 mm, voire plus encore, en raison des hautes performances susceptibles d'être atteintes par la technique de découpe par jet d'eau abrasif. Cette épaisseur correspond également sensiblement à la distance selon laquelle s'étend chaque aube, rapportée selon l'axe du DAM, entre le bord d'attaque et le bord de fuite.

De préférence, les aubes du disque aubagé monobloc sont vrillées, l'angle de vrillage pouvant aller jusqu'à 45°, voire plus encore.

De préférence, ledit bloc de matière utilisé est en titane ou l'un de ses alliages.

De préférence, ledit disque aubagé monobloc est un disque aubagé monobloc pour turbomachine d'aéronef.

Encore plus préférentiellement, ledit disque aubagé monobloc est un disque aubagé monobloc de rotor de turbine ou de compresseur de turbomachine d'aéronef.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en perspective d'un disque aubagé monobloc pour turbomachine, capable d'être obtenu par la mise en oeuvre du procédé de fabrication selon la présente invention ; et
- les figures 2a à 2e représentent des vues schématisant le disque aubagé monobloc à différentes étapes de son procédé de fabrication, lorsque celui-ci se présente sous la forme d'un mode de réalisation préféré.

### EXPOSÉ DÉTAILLÉ DE MODES DE RÉALISATION PRÉFÉRÉS

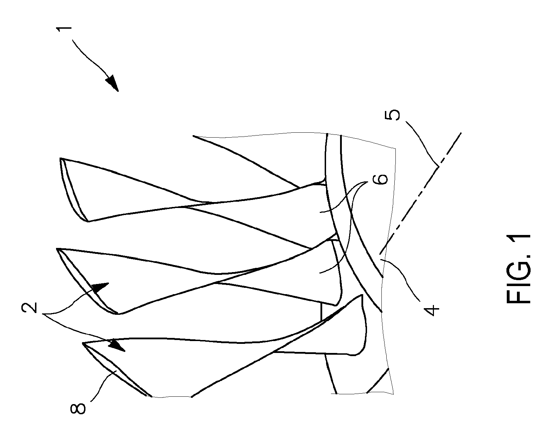

En référence tout d'abord à la figure 1, on peut voir un disque aubagé monobloc 1 destiné à être obtenu par la mise en oeuvre d'un procédé de fabrication selon la présente invention. Il est préférentiellement destiné à la constitution d'un rotor de compresseur ou de turbine d'une turbomachine pour aéronef.

Le disque aubagé monobloc, ci-après dénommé DAM, que l'on recherche à obtenir par le procédé objet de l'invention, est de grandes dimensions, à savoir qu'il présente un diamètre supérieur ou égal à 800 mm, des aubes 2 de longueur au moins égale à 150 mm, et un disque 4 d'épaisseur « e » supérieure ou égale à 130 mm. De plus, les aubes portées par le disque 4 d'axe central 5 sont vrillées de manière importante, puisque l'angle de vrillage peut atteindre 45°, voire plus. A titre informatif, cet angle correspond de manière connue à l'angle fictif entre le pied 6 et la tête 8 d'une même aube 2.

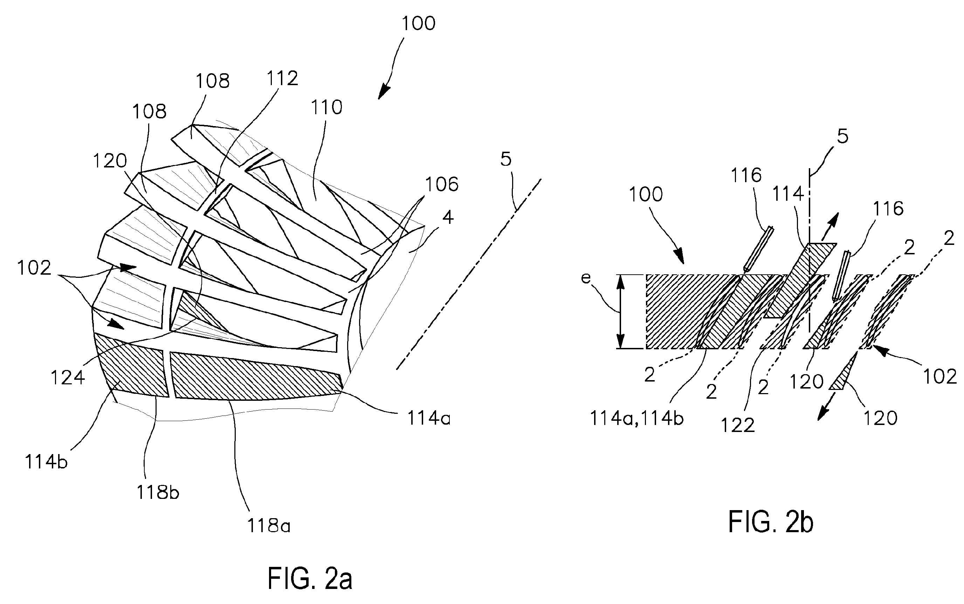

Un mode de réalisation préféré du procédé de fabrication du DAM 1 va maintenant être décrit en référence aux figures 2a à 2e.

Tout d'abord, un bloc de matière en alliage de titane, également dénommé « brut monobloc » et de préférence pré-usiné, subit une première étape de tournage, visant par exemple à usiner ce bloc à 1 mm des cotes finales.

L'étape suivante consiste en une découpe par jet d'eau abrasif du bloc plein, de manière à faire apparaître des préformes d'aubes.

Pour ce faire il est utilisé une machine (non représentée) de découpe par jet d'eau à très haute pression, par exemple 3000 bars, et très haute précision, par exemple à six axes. C'est le très haut niveau de pression de l'eau qui permet de véhiculer l'abrasif en optimisant son effet coupant sur la matière. De manière connue, le jet d'eau est créé par l'intermédiaire d'une buse en diamant ou en saphir. De plus, une chambre de mélange permet l'addition de l'abrasif, tel que du sable. A cet égard, un canon de focalisation homogénéise l'eau et le sable en focalisant ce dernier sur la zone à découper.

Cette technique de découpe par jet abrasif permet un débit de retrait de matière important, ainsi qu'une bonne répétatibilité. Il se révèle ainsi tout à fait adapté au retrait de matière visant à créer des espaces inter-aubes traversant entièrement l'épaisseur « e » du bloc de matière selon son axe 5.

A cet égard, la figure 2a montre en partie haute le bloc de matière 100, une fois l'étape de découpe par jet d'eau abrasif achevée. Ce bloc présente donc des préformes d'aubes 102 s'étendant radialement à partir du disque 4, c'est-à-dire orthogonalement à l'axe central 5. D'une manière générale, la découpe est réalisée dans l'épaisseur du bloc 100 de sorte à faire apparaitre des espaces inter-aubes 110 entre les préformes d'aubes 102 directement consécutives circonférentiellement.

De plus, elle est réalisée de manière à laisser apparaître des moyens de liaison en forme d'anneau 112 entre les préformes 102, cet anneau 112 étant centré sur l'axe 5. Celui-ci relie de préférence la totalité des préformes d'aubes 102 entre elles, à une distance, à partir du pied 4, comprise entre environ la moitié et cinq sixièmes de la longueur totale de la préforme. Ainsi, l'anneau 112 se situe radialement vers l'intérieur par rapport aux têtes 108 des préformes d'aubes, et crée par conséquent un résidu de matière au sein des espaces inter-aubes 110, avant d'être supprimé lors d'une étape ultérieure du procédé.

Cette étape de découpe par jet d'eau abrasif peut être mise en oeuvre en réalisant une première opération de découpe visant à retirer deux premiers morceaux de matière s'étendant chacun sensiblement de manière vrillée ou hélicoïdale dans la direction radiale à partir du disque, ces deux premiers morceaux étant séparés radialement l'un de l'autre par l'anneau, la première opération étant ensuite suivie d'une seconde opération de découpe visant à retirer un second morceau, s'étendant également sensiblement de manière vrillée ou hélicoïdale dans la direction radiale.

Plus précisément en référence à la représentation schématique de la figure 2b, on peut voir sur la partie gauche de celle-ci que la première opération de découpe vise en effet à découper un premier morceau de matière 114a s'étendant sur toute l'épaisseur du bloc 100 selon son axe 5. Pour ce faire, l'axe du canon de focalisation 116 se déplace le long d'une ligne fermée 118a montrée en partie basse de la figure 2a, initiée à partir du pied 4, s'étendant radialement jusqu'à la position théorique de l'anneau 112, la ligne 118a longeant ensuite cet anneau dans la direction circonférentielle, avant de s'étendre à nouveau radialement vers l'intérieur jusqu'au pied 4, qu'elle longe ensuite pour retrouver son point initial.

Durant son parcours le long de la ligne 118a précitée, l'axe du canon 116 est animé d'un mouvement additionnel approprié par rapport à l'axe 5 restant préférentiellement fixe, ce mouvement additionnel se traduisant essentiellement par un pivotement de l'axe du canon selon la direction radiale, et assurant la formation d'un premier morceau 114a de forme sensiblement vrillée dans la direction radiale. D'une façon plus générale, il est noté que la trajectoire décrite par le canon 116 par rapport à l'axe 5 est une trajectoire dite cinq axes, obtenue à l'aide de deux rotations simultanées. Le premier morceau 114a est préférentiellement retiré manuellement par l'opérateur, comme montré schématiquement par la partie centrale de la figure 2b.

Comme cela est visible sur cette même figure, en section quelconque orthogonale à la direction radiale, le morceau 114a prend la forme d'un quadrilatère dont les deux côtés opposés, s'étendant selon l'épaisseur du bloc, passent respectivement au plus près des deux aubes directement consécutives 2 destinées à être obtenues une fois le procédé achevé.

Ensuite, toujours en référence à la partie gauche de la figure 2b et la partie basse de la figure 2a, la première opération de découpe est poursuivie de manière à découper un autre premier morceau de matière 114b s'étendant sur toute l'épaisseur du bloc 100 selon son axe 5, et globalement situé dans le prolongement radial extérieur du morceau 114a, duquel il est séparé par la portion de l'anneau 112 située en regard de ces deux morceaux. Pour ce faire, l'axe du canon de focalisation 116 se déplace le long d'une ligne 118b en forme globale de U montrée en partie basse de la figure 2a, initiée à partir d'une extrémité radiale du bloc 100, et s'étendant radialement vers l'intérieur jusqu'à la position théorique de l'anneau 112, la ligne 118b longeant ensuite cet anneau dans la direction circonférentielle, avant de s'étendre à nouveau radialement vers l'extérieur jusqu'à une autre extrémité radiale du bloc 100.

Durant son parcours le long de la ligne 118b précitée, l'axe du canon 116 est animé d'un mouvement additionnel approprié par rapport à l'axe 5 restant préférentiellement fixe, ce mouvement additionnel se traduisant essentiellement par un pivotement de l'axe du canon selon la direction radiale et assurant la formation d'un autre premier morceau 114b de forme sensiblement vrillée dans la direction radiale. Ce premier morceau 114b est aussi préférentiellement retiré manuellement par l'opérateur, comme montré schématiquement par la partie centrale de la figure 2b. Comme cela est visible sur cette même figure, en section quelconque orthogonale à la direction radiale, le morceau 114b prend lui aussi la forme d'un quadrilatère dont les deux côtés opposés, s'étendant selon l'épaisseur du bloc, passent respectivement au plus près des deux aubes directement consécutives 2 destinées à être obtenues une fois le procédé achevé.

Comme cela découle de ce qui précède, chaque retrait d'un premier morceau 114a, 114b laisse apparaître la surface de deux préformes d'aubes 102 directement consécutives. De préférence, il est d'abord procédé à la découpe de tous les premiers morceaux 114a, 114b dont le nombre est prévu en fonction du nombre d'aubes souhaité pour le DAM, puis il est procédé au retrait manuel de ces morceaux avant de mettre en oeuvre la seconde opération de découpe.

Cette seconde opération est réalisée de manière à ce que les préformes d'aubes qui en découlent se rapprochent au plus près de la forme vrillée à courbure inversée des aubes finales, de laquelle il est difficile de se rapprocher par une simple et unique découpe, étant donné que le jet d'eau abrasif traverse le bloc de manière sensiblement rectiligne, par opposition à la forme courbe des sections d'aubes.

En référence à la représentation schématique de la figure 2b, on peut voir sur la partie droite de celle-ci que la seconde opération de découpe vise en effet à découper un second morceau de matière 120 s'étendant cette fois-ci seulement sur une partie de l'épaisseur du bloc 100, c'est-à-dire seulement sur une partie de l'épaisseur des éléments radiaux 122 formés par le retrait des premiers morceaux 114a, 114b. En outre, le morceau 120 s'étend également seulement sur une portion radiale de son élément 122 associé, à savoir qu'il s'étend à partir du pied sans atteindre la tête de préforme 108, à savoir par exemple seulement jusqu'à l'anneau 112 comme cela ressort de la figure 2a.

Pour ce faire, l'axe du canon de focalisation 116 se déplace le long d'une ligne radiale 124, dont une portion est montrée sur la figure 2a. Elle est initiée à partir du pied 4, et s'étend donc sensiblement radialement jusqu'à atteindre l'anneau 112 apparu lors du retrait des premiers morceaux 114a, 114b. Par exemple, la ligne 124 traversée par le jet d'eau abrasif se situe environ à mi-épaisseur des éléments radiaux 122.

Durant son parcours le long de la ligne 124 précitée, l'axe du canon 116 est animé d'un mouvement additionnel approprié par rapport à l'axe 5 restant préférentiellement fixe, ce mouvement additionnel se traduisant essentiellement par un pivotement de l'axe du canon selon la direction radiale, et assurant la formation d'un second morceau 120 de forme également sensiblement vrillée dans la direction radiale. Ici encore, d'une façon plus générale, il est noté que la trajectoire décrite par le canon 116 par rapport à l'axe 5 est une trajectoire dite cinq axes, obtenue à l'aide de deux rotations simultanées. Ce second morceau 120, une fois entièrement désolidarisé du pied 5, toujours par jet d'eau abrasif, se décroche préférentiellement tout seul, sans aide de l'opérateur, comme montré schématiquement par la partie droite de la figure 2b.

A ce titre, il est noté que le canon 116 se déplace non seulement le long de la ligne sensiblement radiale 124, mais également le long d'une ligne (non représentée) en forme de portion circulaire s'étendant à partir de l'extrémité radiale intérieure de la ligne 124, le long du pied 4, pour la désolidarisation totale du morceau 120 vis-à-vis de ce dernier.

Comme cela est visible sur la figure 2b, en section quelconque orthogonale à la direction radiale, le morceau 120 prend la forme d'un triangle dont l'un des côtés passe au plus près de l'aube 2 destinée à être obtenue à partir de l'élément radial 122 concerné, une fois le procédé achevé.

Une fois tous les seconds morceaux 120 retirés, le bloc ne présente plus que les préformes d'aubes 102 rattachées entre elles par l'anneau 112, qui prend alors la forme d'une couronne annulaire interrompue par chaque préforme 102. L'étape de découpe par jet d'eau abrasif est alors achevée.

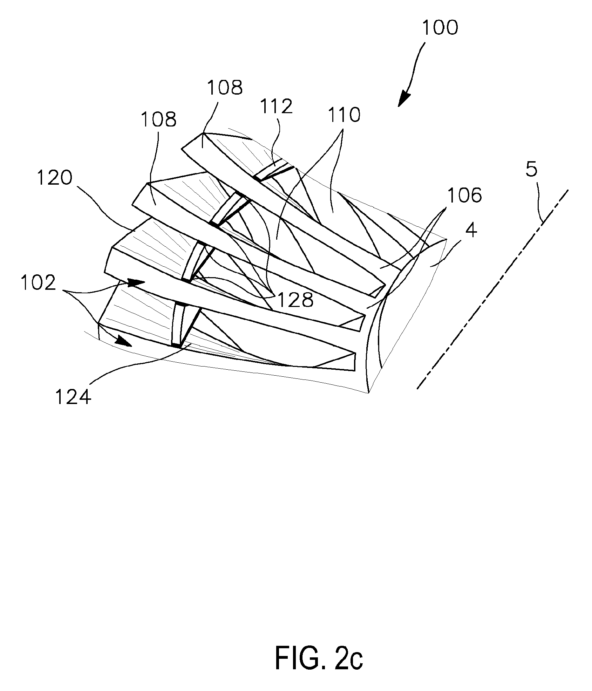

Le procédé est ensuite poursuivi par une étape de retrait de l'anneau 112 reliant les préformes 112. Cette étape est réalisée de manière quelconque réputée appropriée par l'homme du métier, comme la découpe au fil ou le fraisage. A cet égard, la figure 2c montre schématiquement la désolidarisation de l'anneau 112 du reste du bloc 100, par rupture des liaisons entre cet anneau 112 et chacune des préformes. Une fois toutes ces ruptures sensiblement radiales 128 obtenues, l'anneau peut alors effectivement être aisément extrait du bloc 100, section par section.

Ensuite, il est mis en oeuvre une étape de fraisage des préformes d'aubes 102, réalisée de manière à obtenir des ébauches d'aubes 202 mises à profil. En d'autres termes, l'objectif de cette étape, mise en oeuvre par exemple à l'aide d'un outillage de fraisage à cinq axes, est de retirer la matière restante sur les préformes d'aubes 102, afin d'arriver au plus proche des cotes finales, par exemple à 0,6 mm.

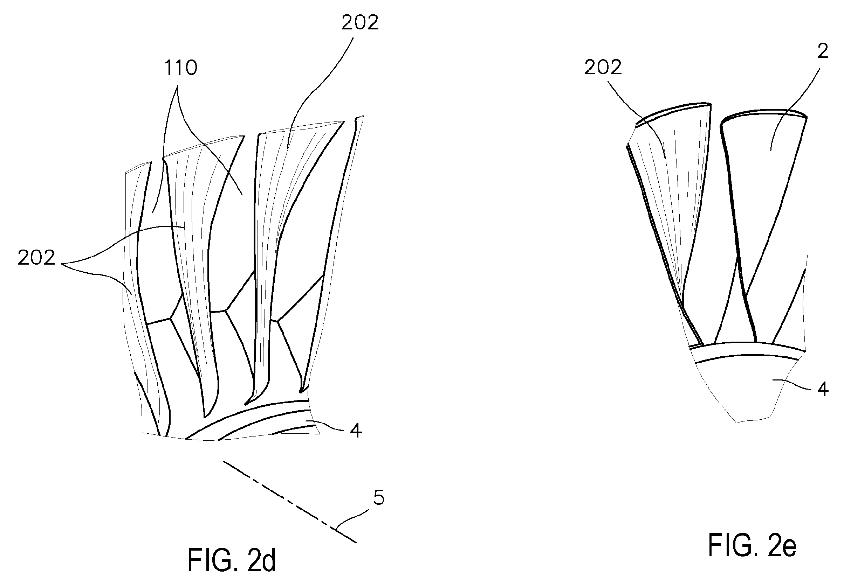

Ici, les préformes 102 sont préférentiellement usinées les unes après les autres, pour former chacune une ébauche d'aube 202 mise à profil, comme représenté sur la figure 2d.

Ensuite, une autre étape de fraisage est réalisée, cette étape dite de finition visant à obtenir, par fraisage, les aubes 2 au profil final, à partir des ébauches 202. L'outillage utilisé permet un usinage plus précis, assurant la mise aux cotes finales, et donc l'obtention des aubes 2 comme cela est montré sur la partie droite de la figure 2e.

A ce stade du procédé, le bloc de matière restant présente un volume inférieur à 25% du volume de ce même bloc tel qu'il se présentait juste avant l'initiation de l'étape de découpe au jet d'eau abrasif, à savoir juste après l'étape précitée de tournage.

En outre, le procédé peut être poursuivi par une ou plusieurs étapes classiques, parmi lesquelles on compte, une étape de polissage, par exemple par ajustage manuel ou par tribofinition, une étape de grenaillage, une étape de mise à longueur des aubes, et/ou une étape d'équilibrage du DAM.

Alternativement, l'anneau pourrait être retiré après l'étape de fraisage des préformes d'aubes, ou bien encore après l'étape finition par fraisage.

## Revendications

1. Procédé de fabrication d'un disque aubagé monobloc (1), comprenant :
- une étape de découpe par jet d'eau abrasif d'un bloc de matière (100), réalisée de manière à faire apparaître des préformes d'aubes (102) s'étendant radialement à partir d'un disque (4), tout en conservant de la matière formant moyens de liaison (112) entre les préformes d'aubes directement consécutives, l'étape de découpe étant réalisée de manière à ce que lesdits moyens de liaison forment sensiblement un anneau espacé radialement dudit disque, et reliant entre elles lesdites préformes d'aubes, à distance de leur tête, radialement vers l'intérieur ; puis
- une étape de retrait desdits moyens de liaison (112).

2. Procédé selon la revendication 1, dans lequel l'étape de découpe par jet d'eau abrasif est réalisée de manière à ce que ledit anneau (112) relie entre elles la totalité des préformes d'aubes (102).

3. Procédé selon l'une quelconque des revendications précédentes, dans lequel ladite étape de découpe par jet d'eau abrasif est suivie d'une étape de fraisage des préformes d'aubes.

4. Procédé selon la revendication 3, dans lequel ladite étape de fraisage des préformes d'aubes (102) est réalisée de manière à obtenir des ébauches d'aubes (202) mises à profil, cette étape étant suivie d'une étape de finition par fraisage des ébauches d'aubes (202), de manière à obtenir les aubes (2) au profil final.

5. Procédé selon la revendication 3 ou la revendication 4, dans lequel ladite étape de retrait desdits moyens de liaison (112) est réalisée antérieurement à ladite étape de fraisage des préformes d'aubes (102).

6. Procédé selon la revendication 4, dans lequel ladite étape de retrait desdits moyens de liaison (112) est réalisée entre ladite étape de fraisage des préformes d'aubes (102) et ladite étape de finition.

7. Procédé selon la revendication 3 ou la revendication 4, dans lequel ladite étape de retrait desdits moyens de liaison (112) est réalisée postérieurement à ladite étape de fraisage des préformes d'aubes (102).

8. Procédé selon la revendication 4, dans lequel ladite étape de retrait desdits moyens de liaison (112) est réalisée postérieurement à ladite étape de finition.

9. Procédé selon l'une quelconque des revendications précédentes, dans lequel ledit disque aubagé monobloc présente un diamètre supérieur ou égal à 800 mm.

10. Procédé selon l'une quelconque des revendications précédentes, dans lequel ledit disque aubagé monobloc présente un disque (4) d'épaisseur (e) supérieure ou égale à 100 mm.

11. Procédé selon l'une quelconque des revendications précédentes, dans lequel les aubes (2) du disque aubagé monobloc sont vrillées.

12. Procédé selon l'une quelconque des revendications précédentes, dans lequel ledit bloc de matière (100) utilisé est en titane ou l'un de ses alliages.

13. Procédé selon l'une quelconque des revendications précédentes, dans lequel ledit disque aubagé monobloc est un disque aubagé monobloc pour turbomachine d'aéronef.

14. Procédé selon l'une quelconque des revendications précédentes, dans lequel ledit disque aubagé monobloc est un disque aubagé monobloc de rotor de turbine ou de compresseur de turbomachine d'aéronef.

## Patentansprüche

1. Verfahren zur Herstellung einer einstückigen beschaufelten Scheibe (1), umfassend:
- einen Schritt zum Schneiden eines Materialblocks (100) mittels Abrasiv-Wasserstrahl, welcher derart durchgeführt wird, dass Schaufelvorformlinge (102), die sich von einer Scheibe (4) aus radial erstrecken, zum Vorschein gebracht werden und gleichzeitig Material, das Verbindungsmittel (112) zwischen wenigstens zwei direkt aufeinander folgenden Schaufelvorformlingen bildet, erhalten bleibt, wobei der Schritt des Schneidens dergestalt ausgeführt wird, dass die genannten Verbindungsmittel im Wesentlichen einen von der genannten Scheibe in radialer Richtung beabstandeten Ring bilden und die genannten Schaufelvorformlingen miteinander verbinden, und zwar von deren Köpfen radial einwärts beabstandet, sowie
- einen Schritt des Entfernens dieser Verbindungsmittel (112).

2. Verfahren nach Anspruch 1, wobei der Schritt des Schneidens mittels Abrasiv-Wasserstrahl derart durchgeführt wird, dass der genannte Ring (112) alle Schaufelvorformlinge (102) miteinander verbindet.

3. Verfahren nach einem der vorherigen Ansprüche, wobei auf den genannten Schritt des Schneidens mittels Abrasiv-Wasserstrahl ein Schritt des Fräsens der Schaufelvorformlinge folgt.

4. Verfahren nach Anspruch 3, wobei der genannte Schritt des Fräsens der Schaufelvorformlingen (102) dergestalt ausgeführt wird, dass auf Profil gebrachte Schaufelrohlinge (202) erhalten werden, wobei auf diesen Schritt ein Schritt zur Endbearbeitung durch Fräsen der Schaufelrohlinge (202) folgt, dergestalt, dass die Schaufeln (2) mit dem Endprofil entstehen.

5. Verfahren nach Anspruch 3 oder Anspruch 4, wobei der genannte Schritt des Entfernens der genannten Verbindungsmittel (112) vor dem genannten Schritt des Fräsens der Schaufelvorformlinge (102) ausgeführt wird.

6. Verfahren nach Anspruch 4, wobei der genannte Schritt des Entfernens der genannten Verbindungsmittel (112) zwischen dem genannten Schritt des Fräsens der Schaufelvorformlinge (102) und dem genannten Schritt der Endbearbeitung ausgeführt wird.

7. Verfahren nach Anspruch 3 oder Anspruch 4, wobei der genannte Schritt des Entfernens der genannten Verbindungsmittel (112) nach dem genannten Schritt des Fräsens der Schaufelvorformlinge (102) ausgeführt wird.

8. Verfahren nach Anspruch 4, wobei der genannte Schritt des Entfernens der genannten Verbindungsmittel (112) nach dem genannten Schritt der Endbearbeitung ausgeführt wird.

9. Verfahren nach einem der vorherigen Ansprüche, bei dem die einstückige beschaufelte Scheibe einen Durchmesser von mehr als oder gleich 800 mm aufweist.

10. Verfahren nach einem der vorherigen Ansprüche, bei dem die einstückige beschaufelte Scheibe eine Scheibe (4) mit einer Stärke (e) von mehr als oder gleich 100 mm ist.

11. Verfahren nach einem der vorherigen Ansprüche, wobei die Schaufeln (2) der einstückigen beschaufelten Scheibe gewunden sind.

12. Verfahren nach einem der vorherigen Ansprüche, wobei der genannte verwendete Materialblock (100) aus Titan oder einer Titanlegierung besteht.

13. Verfahren nach einem der vorherigen Ansprüche, wobei die genannte einstückige beschaufelte Scheibe eine einstückige Schaufelradscheibe für Turbotriebwerke von Luftfahrzeugen ist.

14. Verfahren nach einem der vorherigen Ansprüche, wobei die genannte einteilige Schaufelradscheibe eine einteilige Schaufelradscheibe eines Turbotriebwerk-Rotors oder eines Turbotriebwerk-Verdichters von Luftfahrzeugen ist.

## Claims

1. Process for manufacturing a single-piece blisk (1), comprising:
- a step in which an abrasive water jet is used to cut a block of material (100), so as to create blade preforms (102) extending radially outwards from a disk (4), while keeping material to form the connecting means (112) between directly consecutive blade preforms, the cutting step being done such that said connecting means approximately form a ring at a radial spacing from said disk, and connecting said blade preforms together at a radially inwards distance from their tips; then
- a step to remove said connecting means (112).

2. Process according to claim 1, in which the cutting step using an abrasive water jet is done such that said ring (112) connects all blade preforms to each other (102).

3. Process according to any one of the previous claims, in which said step using an abrasive water jet is followed by a step to mill blade preforms.

4. Process according to claim 3, in which said step to mill blade preforms (102) is done so as to obtain profiled blade blanks (202), this step preferably being followed by a milling step to finish blade blanks (202), so as to obtain blades (2) to the final profile.

5. Process according to claim 3 or claim 4, in which said step to remove said connecting means (112) is done before said step to mill blade preforms (102).

6. Process according to claim 4, in which said step to remove said connecting means (112) is done between said step to mill blade preforms (102) and said finishing step.

7. Process according to claim 3 or claim 4, in which said step to remove said connecting means (112) is done after said step to mill blade preforms (102).

8. Process according to claim 4, in which said step to remove said connecting means (112) is done after said finishing step.

9. Process according to any one of the previous claims, in which the diameter of said single-piece blisk is greater than or equal to 800 mm.

10. Process according to any one of the previous claims, in which the thickness (e) of said single-piece blisk (4) is greater than or equal to 100 mm.

11. Process according to any one of the previous claims, in which the blades (2) of the single-piece blisk are twisted.

12. Process according to any one of the previous claims, in which said material block (100) used is made of titanium or a titanium alloy.

13. Process according to any one of the previous claims, in which said single-piece blisk is a single-piece blisk for an aircraft turbine engine.

14. Process according to any one of the previous claims, in which said single-piece blisk is a single-piece blisk for a turbine or compressor rotor in an aircraft turbine engine.
